# FASCICULE DE BREVET EUROPEEN

(11) **EP 0 875 692 B1**
(45) Date de publication et mention de la délivrance du brevet: **14.11.2001**
(21) Numéro de dépôt: 98401005.8
(22) Date de dépôt: 24.04.1998
(51) Int. Cl.: F16F 1/38, F16F 13/14

(54) **Dispositif antivibratoire**
Dämpfungsvorrichtung
Damping device

(30) Priorité: 28.04.1997 FR 9705216
(43) Date de publication de la demande: 04.11.1998
(73) Titulaire: HUTCHINSON, 75008 Paris (FR)
(72) Inventeur: Pelle, Thierry, 41100 Aze (FR)
(74) Mandataire: Burbaud, Eric

(56) Documents cités:
- EP-A- 0 646 735
- EP-A- 0 709 594
- DE-C- 4 137 692
- PATENT ABSTRACTS OF JAPAN vol. 018, no. 469 (M-1666), 31 août 1994 & JP 06 147245 A (BRIDGESTONE CORP), 27 mai 1994,
- PATENT ABSTRACTS OF JAPAN vol. 096, no. 001, 31 janvier 1996 & JP 07 233849 A (N O K MEGURASUTEITSUKU KK), 5 septembre 1995,
- PATENT ABSTRACTS OF JAPAN vol. 016, no. 103 (M-1221), 13 mars 1992 & JP 03 277845 A (KINUGAWA RUBBER IND CO LTD), 9 décembre 1991,
- PATENT ABSTRACTS OF JAPAN vol. 095, no. 004, 31 mai 1995 & JP 07 004467 A (TOYOTA MOTOR CORP), 10 janvier 1995,

## Description

La présente invention est relative aux dispositifs antivibratoires.

Plus particulièrement, l'invention concerne un dispositif antivibratoire, destiné à être interposé entre deux éléments rigides pour amortir des vibrations entre ces deux éléments, ce dispositif comportant :
- des première et deuxième armatures rigides, solidarisables respectivement avec les deux éléments rigides à réunir,
- un corps en élastomère qui relie entre elles les deux armatures rigides,
- et une première butée en élastomère, qui est solidaire de l'une des deux armatures rigides et qui est adaptée pour venir en contact avec une première contrebutée solidaire de l'autre des deux armatures rigides, pour limiter le déplacement de la première armature relativement à la deuxième armature parallèlement à un axe déterminé, dans un sens déterminé, la première butée étant sensiblement indéformable perpendiculairement à cet axe, de sorte que cette première butée empêche sensiblement tout débattement relatif entre les première et deuxième armatures perpendiculairement audit axe déterminé lorsque ladite première butée est en contact avec la première contrebutée, la première butée étant normalement écartée de la première contrebutée.

Un tel dispositif antivibratoire est divulgué par exemple dans le document EP-A-0 646 735.

Les dispositifs antivibratoires connus de ce type permettent, en fonctionnement normal, un bon amortissement et un bon filtrage des mouvements vibratoires relatifs entre les deux éléments rigides réunis par ces dispositifs.

Toutefois, du fait que la première butée de ces dispositifs doit être très raide pour assurer efficacement la limitation du mouvement relatif de la première armature par rapport à la deuxième armature, les performances desdits dispositifs se dégradent lorsque la ladite première butée est maintenue quelque temps en contact avec la contrebutée correspondante, par exemple dans les phases d'accélération ou de décélération d'un véhicule lorsque le dispositif antivibratoire relie le moteur de ce véhicule au châssis dudit véhicule.

En effet, dans ce cas, la première butée transmet directement les vibrations entre les deux armatures rigides.

La présente invention a notamment pour but de pallier cet inconvénient.

A cet effet, selon l'invention, un dispositif antivibratoire du genre en question est essentiellement caractérisé en ce qu'il comporte en outre une deuxième butée en élastomère, distincte de la première butée, qui est solidaire de l'une des deux armatures rigides et qui est adaptée pour venir en contact avec une deuxième contrebutée solidaire de l'autre des deux armatures rigides, également pour limiter le déplacement de la première armature relativement à la deuxième armature parallèlement audit axe déterminé dans ledit sens déterminé, la deuxième butée étant normalement écartée de la seconde contrebutée et étant adaptée pour venir en contact avec ladite deuxième contrebutée avant que la première butée ne vienne en contact avec la première contrebutée lorsque la première armature est déplacée relativement à la deuxième armature selon ledit sens déterminé parallèlement audit axe déterminé, la deuxième butée étant moins raide que la première butée parallèlement audit axe déterminé, et la deuxième butée présentant en outre une certaine souplesse perpendiculairement audit axe déterminé, pour permettre des débattements relatifs entre les deux armatures rigides perpendiculairement audit axe déterminé lorsque la deuxième butée est en contact avec la deuxième contrebutée mais que la première butée n'est pas en contact avec la première contrebutée.

Grâce à ces dispositions, la limitation du mouvement relatif de la première armature par rapport à la deuxième armature est obtenue dans la majeure partie des cas par la deuxième butée, qui est suffisamment souple pour éviter de transmettre directement les vibrations entre les première et deuxième armatures, et c'est uniquement dans des cas exceptionnels de la première butée vient en contact avec la première contrebutée.

Dans des modes de réalisation préférés de l'invention, on peut éventuellement avoir recours en outre à l'une et/ou à l'autre des dispositions suivantes :
- les première et deuxième butées présentent chacune une certaine épaisseur parallèlement audit axe déterminé, une certaine section perpendiculairement à cet axe, et un certain élancement défini comme étant égal au rapport entre ladite épaisseur et ladite section, l'élancement de la deuxième butée étant supérieur à l'élancement de la première butée ;
- l'élancement de la deuxième butée est supérieur à 2 fois l'élancement de la première butée;
- les première et deuxième butées sont toutes les deux solidaires de la première armature, les première et deuxième contrebutées étant toutes les deux solidaires de la deuxième armature ;
- les première et deuxième contrebutées sont constituées par deux zones voisines appartenant à une même surface sensiblement perpendiculaire à l'axe déterminé, la première armature comprenant des première et deuxième portions à partir desquelles s'étendent respectivement les première et deuxième butées en direction des première et deuxième contrebutées, ces première et deuxième portions de la première armature étant séparées desdites première et deuxième contrebutées respectivement par des première et deuxième distances, et ladite première distance étant inférieure à ladite deuxième distance ;
- le support antivibratoire est adapté pour amortir des vibrations entre les deux armatures rigides essentiellement selon une direction principale de vibrations, qui est perpendiculaire audit axe déterminé ;
- le corps en élastomère comporte une paroi épaisse reliant entre elles les deux armatures rigides et délimitant partiellement au moins une première chambre hydraulique remplie de liquide, le dispositif antivibratoire comportant en outre :
   . une deuxième chambre hydraulique déformable qui est également remplie de liquide,
   . et un passage étranglé rempli de liquide, qui relie entre elles les première et deuxième chambres hydrauliques ;
- le dispositif antivibratoire est adapté pour amortir des vibrations entre les deux armatures rigides essentiellement selon une direction principale de vibrations, le corps en élastomère comprenant une paroi mince librement déformable qui délimite partiellement la deuxième chambre hydraulique, la deuxième armature étant constituée par une plaque qui est sensiblement perpendiculaire à la direction principale de vibrations et qui présente une face solidarisée de façon étanche avec le corps en élastomère pour délimiter avec celui-ci les deux chambres hydrauliques et le canal étranglé ;
- les première et deuxième butées sont solidaires de la première armature, les première et deuxième contrebutées étant constituées par des zones voisines appartenant à un capot en tôle qui recouvre au moins partiellement le corps en élastomère et qui est solidaire de la deuxième armature.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en coupe verticale d'un dispositif antivibratoire selon une forme de réalisation de l'invention,
- la figure 2 est une vue en coupe selon la ligne II-II de la figure 1,
- et la figure 3 est une vue en coupe selon la ligne III-III de la figure 2.

Sur les différentes figures, les mêmes références désignent des éléments identiques ou similaires.

Dans la forme de réalisation de l'invention représentée sur les dessins, le dispositif antivibratoire est un support hydraulique comportant des première et deuxième armatures métalliques rigides 1 et 2 qui sont reliées entre elles par un corps en élastomère 3 et qui sont destinées à être interposées entre deux éléments rigides (non représentés) aux fins d'amortissement et de liaison.

La première armature 1 est destinée à être solidarisée avec une charge à supporter, par exemple un groupe motopropulseur de véhicule. Dans l'exemple considéré ici, cette première armature présente la forme d'un organe allongé qui est percé d'un alésage central 4 pour la fixation de la charge à supporter et qui s'étend longitudinalement selon un axe Y sensiblement horizontal.

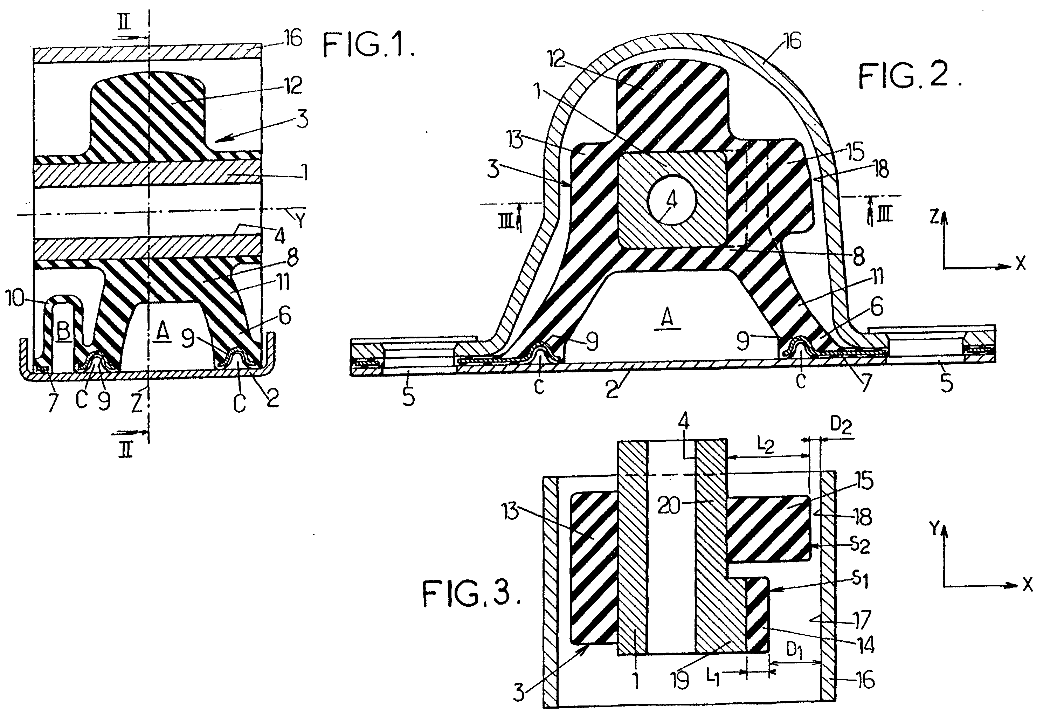

La deuxième armature 2, quant à elle, est une platine de forme générale plane au moins par morceaux, qui est destinée à être fixée en général au châssis du véhicule, par exemple par l'intermédiaire de trous de fixation 5 (figure 2).

Cette deuxième armature 2 s'étend perpendiculairement à un axe Z qui est en l'occurrence vertical et qui représente la direction principale des vibrations à amortir.

Le corps en élastomère 3 présente une base 6 relativement large qui est solidarisée de façon étanche avec la deuxième armature 2, notamment au moyen d'une plaque métallique ajourée 7 qui est noyée dans ladite base et qui peut présenter par exemple des pattes (non représentées) serties sur les bords de la deuxième armature 2.

A partir de la base 6, le corps en élastomère s'étend vers le haut parallèlement à l'axe Z, en convergeant vers un sommet 8 dans lequel est partiellement noyée la première armature 1 et qui est solidarisé avec cette première armature par vulcanisation.

Dans la face inférieure de la base 6 du corps en élastomère, qui est appliquée avec étanchéité contre la deuxième armature 2, sont creusées deux cavités qui constituent respectivement une chambre de travail A, disposée sous la première armature 1, et une chambre de compensation B, disposée à l'écart de ladite première armature.

De plus, dans la face inférieure de la base 6 du corps en élastomère est également creusée une gorge dont la forme est de préférence définie au moins partiellement par un emboutissage 9 de la plaque ajourée 7, cette gorge constituant un canal étranglé C qui relie en permanence les chambres A, B susmentionnées.

L'ensemble constitué par la chambre de travail A, la chambre de compensation B et le canal étranglé C, est fermé de façon étanche par la deuxième armature 2, et cet ensemble est rempli d'un liquide qui peut passer d'une chambre à l'autre par l'intermédiaire du canal étranglé aux fins d'amortissement des mouvements vibratoires entre les deux armatures 1 et 2.

Afin de permettre les transferts de liquide d'une chambre à l'autre, le corps en élastomère 3 est conformé de façon que la chambre de compensation B soit délimitée par une paroi 10 dudit corps qui est relativement fine et souple, et de façon que la chambre de travail A soit elle-même délimitée par une paroi 11 relativement épaisse du corps 3, cette paroi épaisse assurant la liaison entre les armatures 1 et 2 et étant adaptée pour reprendre une charge statique allant par exemple de 1000 à 1500 N, ou éventuellement plus.

Par ailleurs, le corps en élastomère 3 comporte des bossages 12-15 qui sont adaptés pour limiter les débattements de la première armature 1 par butée contre une plaque de tôle 16 en forme d'arceau qui est solidarisée avec la deuxième armature 2 et qui forme un capot rigide recouvrant au moins partiellement le corps en élastomère 3.

Parmi ces différents bossages, l'invention concerne plus particulièrement les bossages 14 et 15, qui constituent respectivement des première et deuxième butées et qui s'étendent à partir de la première armature 1 parallèlement l'un à l'autre selon un axe X horizontal perpendiculaire aux axes susmentionnés Y et Z.

Ces deux bossages en élastomère 14, 15 sont adaptés pour buter respectivement contre des première et deuxième zones de contrebutée 17, 18 voisines, appartenant à une surface sensiblement perpendiculaire à l'axe X qui fait partie de la face intérieure de l'arceau 16.

Le bossage 14 en élastomère s'étend sur une faible épaisseur L1 parallèlement à l'axe X, par exemple de l'ordre de 0,5 cm, et ledit bossage 14 présente perpendiculairement audit axe X une section S1 relativement grande, par exemple de l'ordre de 5 cm².

Le bossage 14 présente donc un faible élancement L1/S1 parallèlement à l'axe X, par exemple de l'ordre de 0,1 cm⁻¹ de sorte que ce bossage 14 a une grande raideur selon l'axe X.

De plus, du fait de son faible élancement, le bossage 14 est sensiblement indéformable perpendiculairement à l'axe X. Ce bossage 14 empêche donc sensiblement, ou tout au moins limite fortement, les débattements de la première armature 1 perpendiculairement à l'axe X lorsque ledit bossage est en appui contre la zone de contrebutée 17 correspondante, compte tenu du frottement qui existe alors entre le bossage 14 et la zone de contrebutée 17.

Lorsque le support antivibratoire est dans une position de repos, le bossage 14 est située à une distance D1 de la zone de contrebutée 17 correspondante, le bossage 14 étant de préférence formé sur une partie saillante 19 de la première armature 1 qui s'étend parallèlement à l'axe X en direction de la zone de contrebutée 17.

Le bossage 15 en élastomère, quant à lui, s'étend à partir d'une zone 20 de la première armature 1 qui est plus éloignée de l'arceau 16 que ne l'est la partie saillante 19, sur une épaisseur L2 supérieure à L1 parallèlement à l'axe X, cette épaisseur L2 pouvant par exemple être de l'ordre de 2 cm, et l'extrémité libre du bossage 15 étant séparée de la zone de contrebutée 18 correspondante par une distance D2 inférieure à D1.

Par ailleurs, le bossage 15 présente, perpendiculairement à l'axe X, une section S2 qui peut par exemple être de l'ordre de 5 cm², de sorte que le bossage 15 présente un élancement L2/S2 relativement grand parallèlement à l'axe X, par exemple de l'ordre de 0,4 cm⁻¹.

Ainsi, le bossage 15 présente une souplesse beaucoup plus importante que le bossage 14 à la fois parallèlement l'axe X et perpendiculairement à cet axe, de sorte que :
- ce bossage limite beaucoup plus progressivement que le bossage 14 les mouvements subis par la première armature 1 parallèlement à l'axe X en direction de la zone de contrebutée 18,
- et ledit bossage 15 autorise par ailleurs des débattements de l'armature 1 parallèlement aux axes Y et Z lorsqu'il est en appui contre l'arceau 16.

Ainsi, au cours du fonctionnement normal du véhicule, par exemple pendant les phases d'accélération dudit véhicule, le bossage 15 vient en appui contre la zone de contrebutée 18 correspondante, mais cet appui est souple, de sorte que le bossage 15 ne transmet pas directement les vibrations du moteur vers le châssis.

De plus, le bossage 15 permet alors au support antivibratoire hydraulique de continuer à travailler normalement, puisque la première armature 1 peut alors encore se déplacer parallèlement à l'axe Z en générant des transferts de liquide entre la chambre de travail A et la chambre de compensation B par l'intermédiaire du canal étranglé C, ce qui permet de conserver les caractéristiques d'amortissement particulièrement bonnes propres aux supports antivibratoires hydrauliques.

Le bossage 14, quant à lui, ne vient en contact avec la zone de contrebutée 17 correspondante que très exceptionnellement, dans des conditions de fonctionnement extrêmes où les questions de transmission de vibrations entre les armatures 1 et 2 deviennent secondaires, le bossage 14 ayant alors essentiellement une fonction de sécurité pour empêcher un déplacement trop important de la première armature 1.

Bien entendu, l'invention n'est pas limitée au mode de réalisation particulier qui vient d'être décrit ; elle englobe notamment les variantes dans lesquelles :
- les chambres hydrauliques du dispositif antivibratoire seraient disposées différemment des chambres décrites ci-dessus,
- le dispositif antivibratoire serait orienté de façon que son axe Z ne soit pas vertical,
- le dispositif antivibratoire relierait entre eux deux éléments rigides autres qu'un moteur et un châssis de véhicule,
- le dispositif antivibratoire comporterait une ou plusieurs paires de butées en élastomère similaires aux bossages 14, 15 susmentionnés, au moins certaines de ces paires de butées étant disposées pour limiter les débattements relatifs des deux armatures rigides 1, 2 selon d'autres axes que l'axe X, et/ou selon l'axe X mais dans un sens opposé à la limitation de débattement réalisé par les bossages 14, 15,
- le dispositif antivibratoire n'aurait qu'un rôle de liaison entre deux éléments rigides, mais pas de rôle de support,
- le dispositif antivibratoire ne comporterait pas de chambres hydrauliques ni de passage étranglé.

## Revendications

1. Dispositif antivibratoire, destiné à être interposé entre deux éléments rigides pour amortir des vibrations entre ces deux éléments, ce support comportant :
- des première et deuxième armatures rigides (1, 2), solidarisables respectivement avec les deux éléments rigides à réunir,
- un corps en élastomère (3) qui relie entre elles les deux armatures rigides (1, 2),
- et une première butée en élastomère (14), qui est solidaire de l'une (1) des deux armatures rigides et qui est adaptée pour venir en contact avec une première contrebutée (17) solidaire de l'autre (2) des deux armatures rigides, pour limiter le déplacement de la première armature (1) relativement à la deuxième armature (2) parallèlement à un axe déterminé (X), dans un sens déterminé, la première butée (14) étant sensiblement indéformable perpendiculairement à cet axe, de sorte que cette première butée empêche sensiblement tout débattement relatif entre les première et deuxième armatures perpendiculairement audit axe déterminé (X) lorsque ladite première butée est en contact avec la première contrebutée, la première butée étant normalement écartée de la première contrebutée,
**caractérisé en ce qu'**il comporte en outre une deuxième butée (15) en élastomère, distincte de la première butée (14), qui est solidaire de l'une (1) des deux armatures rigides et qui est adaptée pour venir en contact avec une deuxième contrebutée (18) solidaire de l'autre (2) des deux armatures rigides, également pour limiter le déplacement de la première armature (1) relativement à la deuxième armature (2) parallèlement audit axe déterminé (X) dans ledit sens déterminé, la deuxième butée (15) étant normalement écartée de la seconde contrebutée (18) et étant adaptée pour venir en contact avec ladite deuxième contrebutée avant que la première butée (14) ne vienne en contact avec la première contrebutée (17) lorsque la première armature (1) est déplacée relativement à la deuxième armature (2) selon ledit sens déterminé parallèlement audit axe déterminé (X), la deuxième butée (15) étant moins raide que la première butée (14) parallèlement audit axe déterminé, et la deuxième butée (15) présentant en outre une certaine souplesse perpendiculairement audit axe déterminé (X), pour permettre des débattements relatifs entre les deux armatures rigides (1, 2) perpendiculairement audit axe déterminé lorsque la deuxième butée (15) est en contact avec la deuxième contrebutée (18) mais que la première butée (14) n'est pas en contact avec la première contrebutée (17).

2. Dispositif antivibratoire selon la revendication 1, dans lequel les première et deuxième butées (14, 15) présentent chacune une certaine épaisseur (L1, L2) parallèlement audit axe déterminé (X), une certaine section (S1, S2) perpendiculairement à cet axe, et un certain élancement défini comme étant égal au rapport entre ladite épaisseur et ladite section, l'élancement de la deuxième butée (15) étant supérieur à l'élancement de la première butée (14).

3. Dispositif antivibratoire selon la revendication 2, dans lequel l'élancement de la deuxième butée (15) est supérieur à 2 fois l'élancement de la première butée (14).

4. Dispositif antivibratoire selon l'une quelconque des revendications précédentes, dans lequel les première et deuxième butées (14, 15) sont toutes les deux solidaires de la première armature (1), les première et deuxième contrebutées (17, 18) étant toutes les deux solidaires de la deuxième armature (2).

5. Dispositif antivibratoire selon la revendication 4, dans lequel les première et deuxième contrebutées (17, 18) sont constituées par deux zones voisines appartenant à une même surface sensiblement perpendiculaire à l'axe déterminé, la première armature comprenant des première et deuxième portions (19, 20) à partir desquelles s'étendent respectivement les première et deuxième butées (14, 15) en direction des première et deuxième contrebutées, ces première et deuxième portions de la première armature étant séparées des première et deuxième contrebutées respectivement par des première et deuxième distances (L1 + D1, L2 + D2), et ladite première distance (L1 + D1) étant inférieure à ladite deuxième distance (L2 + D2).

6. Dispositif antivibratoire selon l'une quelconque des revendications précédentes, adapté pour amortir des vibrations entre les deux armatures rigides (1, 2) essentiellement selon une direction principale de vibrations (Z), qui est perpendiculaire audit axe déterminé (X).

7. Dispositif antivibratoire selon l'une quelconque des revendications précédentes, dans lequel : le corps en élastomère (3) comporte une paroi épaisse (11) reliant entre elles les deux armatures rigides (1, 2) et délimitant partiellement au moins une première chambre hydraulique (A) remplie de liquide, le dispositif antivibratoire comportant en outre :
- une deuxième chambre hydraulique (B) déformable qui est également remplie de liquide,
- et un passage étranglé (C) rempli de liquide, qui relie entre elles les première et deuxième chambres hydrauliques.

8. Dispositif antivibratoire selon la revendication 7, adapté pour amortir des vibrations entre les deux armatures rigides (1, 2) essentiellement selon une direction principale de vibrations (Z), le corps en élastomère (3) comprenant une paroi mince (10) librement déformable qui délimite partiellement la deuxième chambre hydraulique, la deuxième armature (2) étant constituée par une plaque qui est sensiblement perpendiculaire à la direction principale de vibrations (Z) et qui présente une face solidarisée de façon étanche avec le corps en élastomère (3) pour délimiter avec celui-ci les deux chambres hydrauliques (A, B) et le canal étranglé (C).

9. Dispositif antivibratoire selon la revendication 8, dans lequel les première et deuxième butées (14, 15) sont solidaires de la première armature (1), les première et deuxième contrebutées (17, 18) étant constituées par des zones voisines appartenant à un capot en tôle (16) qui recouvre au moins partiellement le corps en élastomère (3) et qui est solidaire de la deuxième armature (2).

## Patentansprüche

1. Dämpfungsvorrichtung, die dazu vorgesehen ist, zwischen zwei starren Elementen angeordnet zu werden, um Schwingbewegungen zwischen diesen beiden Elementen zu dämpfen, bestehend aus:
- einer ersten und einer zweiten starren Halterung (1, 2), die mit den beiden zu verbindenden starren Elementen fest verbunden werden können,
- einem Elastomerkörper (3), der die beiden starren Halterungen (1, 2) miteinander verbindet, und
- einen ersten Elastomeranschlag (14), der mit einer (1) der beiden starren Halterungen fest verbunden ist und geeignet ist, in Kontakt mit einem ersten Gegenanschlag (17) zu kommen, der mit der anderen (2) der beiden starren Halterungen fest verbunden ist, um die Bewegung der ersten Halterung (1) relativ zur zweiten Halterung (2) parallel zu einer bestimmten Achse (X) und in einer bestimmten Richtung zu beschränken, wobei der erste Anschlag (14) im rechten Winkel zu dieser Achse im wesentlichen nicht verformbar ist, so dass dieser erste Anschlag im Prinzip jeglichen relativen Ausschlag zwischen der ersten und der zweiten Halterung im rechten Winkel zu dieser bestimmten Achse (X) verhindert, wenn sich dieser erste Anschlag in Kontakt mit dem ersten Gegenanschlag befindet, wobei sich der erste Anschlag normalerweise in Abstand von dem ersten Gegenanschlag befindet,
**dadurch gekennzeichnet,**
**dass** sie ferner einen zweiten, von dem ersten Anschlag (14) unterschiedenen Elastomeranschlag (15) aufweist, der mit einer (1) der beiden starren Halterungen fest verbunden ist und geeignet ist, in Kontakt mit einem zweiten Gegenanschlag (18) zu kommen, der mit der anderen (2) der beiden starren Halterungen fest verbunden ist, um die Bewegung der ersten Halterung (I) relativ zur zweiten Halterung (2) parallel zu dieser bestimmten Achse (X) und in dieser bestimmten Richtung zu beschränken, wobei der zweite Anschlag (15) sich normalerweise in Abstand von dem zweiten Gegenanschlag (18) befindet und geeignet ist, in Kontakt mit diesem zweiten Gegenanschlag zu kommen, bevor der erste Anschlag (14) in Kontakt mit dem ersten Gegenanschlag (17) kommt, wenn die erste Halterung (1) relativ zur zweiten Halterung (2) in dieser bestimmten Richtung parallel zu dieser bestimmten Achse (X) bewegt wird, wobei der zweite Anschlag (15) parallel zu dieser bestimmten Achse weniger starr ist als der erste Anschlag (14), und der zweite Anschlag (15) ferner im rechten Winkel zu dieser bestimmten Achse (X) eine gewisse Nachgiebigkeit aufweist, um relative Ausschläge zwischen den beiden starren Halterungen (1, 2) im rechten Winkel zu dieser bestimmten Achse zu ermöglichen, wenn sich der zweite Anschlag (15) in Kontakt mit dem zweiten Gegenanschlag (18) befindet, jedoch der erste Anschlag (14) sich nicht in Kontakt mit dem ersten Gegenanschlag (17) befindet.

2. Dämpfungsvorrichtung nach Anspruch 1, wobei der erste und der zweite Anschlag (14, 15) parallel zu dieser bestimmten Achse (X) jeweils eine gewisse Dicke (L1, L2) aufweisen, im rechten Winkel zu dieser Achse einen gewissen Querschnitt (S1, S2) aufweisen, sowie einen gewissen Schlankheitsgrad aufweisen, der so bestimmt ist, dass er gleich dem Verhältnis dieser Dicke zu diesem Querschnitt ist, wobei der Schlankheitsgrad des zweiten Anschlags (15) größer ist als der Schlankheitsgrad des ersten Anschlags (14).

3. Dämpfungsvorrichtung nach Anspruch 2, wobei der Schlankheitsgrad des zweiten Anschlags (15) um das Zweifache größer ist als der Schlankheitsgrad des ersten Anschlags (14).

4. Dämpfungsvorrichtung nach einem der vorherigen Ansprüche, wobei der erste und der zweite Anschlag (14, 15) alle beide fest mit der ersten Halterung (1) verbunden sind, wobei der erste und der zweite Gegenanschlag (17, 18) alle beide fest mit der zweiten Halterung (2) verbunden sind.

5. Dämpfungsvorrichtung nach Anspruch 4, wobei der erste und der zweite Gegenanschlag (17, 18) aus zwei aneinandergrenzenden Bereichen bestehen, die zu einer und derselben Fläche gehören, die im wesentlichen im rechten Winkel zu dieser bestimmten Achse liegt, wobei die erste Halterung einen ersten und einen zweiten Abschnitt (19, 20) aufweist, von denen aus sich der erste bzw. der zweite Anschlag (14, 15) in Richtung des ersten und zweiten Gegenanschlags erstrecken, wobei dieser erste und zweite Abschnitt der ersten Halterung von dem ersten bzw. zweiten Gegenanschlag durch einen ersten bzw. zweiten Abstand (L1 + D1, L2 + D2) getrennt sind und dieser erste Abstand (L1 + D1) kleiner ist als dieser zweite Abstand (L2 + D2).

6. Dämpfungsvorrichtung nach einem der vorherigen Ansprüche, die geeignet ist, die Schwingbewegungen zwischen den beiden starren Halterungen (1, 2) im wesentlichen in einer Hauptschwingrichtung (Z) zu dämpfen, die im rechten Winkel zu dieser bestimmten Achse (X) liegt.

7. Dämpfungsvorrichtung nach einem der vorherigen Ansprüche, wobei der Elastomerkörper (3) eine dicke Wand (11) aufweist, die die beiden starren Halterungen (1, 2) miteinander verbindet und zumindest teilweise eine erste, mit Flüssigkeit gefüllte Hydraulikkammer (A) umgrenzt, wobei die Dämpfungsvorrichtung ferner aufweist:
- eine zweite, verformbare Hydraulikkammer (B), die ebenfalls mit Flüssigkeit gefüllt ist, und
- einen engen, mit Flüssigkeit gefüllten Durchlass (C), der die erste und die zweite Hydraulikkammer miteinander verbindet.

8. Dämpfungsvorrichtung nach Anspruch 7, die geeignet ist, die Schwingbewegungen zwischen den beiden starren Halterungen (1, 2) im wesentlichen in einer Hauptschwingrichtung (Z) zu dämpfen, wobei der Elastomerkörper (3) eine frei verformbare dünne Wand (10) aufweist, die die zweite Hydraulikkammer teilweise umgrenzt, wobei die zweite Halterung (2) aus einer Platte besteht, die im wesentlichen im rechten Winkel zur Hauptschwingrichtung (Z) liegt und mit einer Seite dicht mit dem Elastomerkörper (3) verbunden ist, um mit diesem die beiden Hydraulikkammern (A, B) und den engen Kanal (C) zu umgrenzen.

9. Dämpfungsvorrichtung nach Anspruch 8, wobei der erste und der zweite Anschlag (14, 15) mit der ersten Halterung (1) fest verbunden sind, wobei der erste und der zweite Gegenanschlag (17, 18) aus zwei aneinandergrenzenden Bereichen bestehen, die zu einer Blechblende (16) gehören, welche zumindest teilweise den Elastomerkörper (3) bedeckt und mit der zweiten Halterung (2) fest verbunden ist.

## Claims

1. Antivibration device for interposing between two rigid elements to damp vibration between said two elements, the device comprising:
• first and second rigid strength members (1, 2) suitable for securing respectively to the two rigid elements to be united;
• an elastomer body (3) interconnecting the two rigid strength members (1, 2); and
• a first elastomer abutment (14) secured to one (1) of the two rigid strength members and adapted to come into contact with a first counter-abutment (17) secured to the other (2) of the two rigid strength members, to limit the displacement of the first strength member (1) relative to the second strength member (2) parallel to a determined axis (X) in a determined direction, the first abutment (14) being substantially undeformable perpendicularly to said axis, such that said first abutment substantially prevents any relative movement between the first and second strength members perpendicularly to said determines axis (X) when said first abutment is in contact with the first counter-abutment, the first abutment normally being at a distance from the first counter-abutment,
**the device being characterized in that** it further comprises a second elastomer abutment (15) different from the first abutment (14), secured to one (1) of the two rigid strength members and adapted to come into contact with a second counter-abutment (18) secured to the other (2) of the two rigid strength members, also for limiting movement of the first strength member (1) relative to the second strength member (2) parallel to said determined axis (X) and in said determined direction, the second abutment (15) normally being spaced apart from the second counter-abutment (18), and being adapted to come into contact with said second counter-abutment before the first abutment (18) comes into contact with the first counter-abutment (17) when the first strength member (1) moves relative to the second strength member (2) and in said determined direction parallel to said determined axis (X), the second abutment (15) being less stiff than the first abutment (14) parallel to said determined axis, and the second abutment (15) also presenting a certain amount of flexibility perpendicular to said determined axis (X) to allow relative movement between the two rigid strength members (1, 2) perpendicular to said determined axis when said second abutment (15) is in contact with the second counter-abutment (18), so long as the first abutment (14) is not in contact with the first counter-abutment (17).

2. An antivibration device according to claim 1, in which each of the first and second abutments (14, 15) presents a certain length (L1, L2) parallel to said determined axis (X), a certain section (S1, S2) perpendicular to said axis, and a certain slenderness ratio defined as being equal to said length divided by said section, the slenderness ratio of the second abutment (15) being greater than the slenderness ratio of the first abutment (14).

3. An antivibration device according to claim 2, in which the slenderness ratio of the second abutment (15) is more than twice the slenderness ratio of the first abutment (14).

4. An antivibration device according to any preceding claim, in which the first and second abutments (14, 15) are both secured to the first strength member (1), the first and second counter-abutments (17, 18) both being secured to the second strength member (2).

5. An antivibration device according to claim 4, in which the first and second counter-abutments (17, 18) are constituted by two adjacent zones belonging to a common surface substantially perpendicular to the determined axis, the first strength member including first and second portions (19, 20) from which the first and second abutments (14, 15) extend respectively towards the first and second counter-abutments, said first and second portions of the first strength member being separated from the first and second counter-abutments respectively by first and second distances (L1+D1, L2+D2), and said first distance (L1+D1) being smaller than said second distance (L2+D2).

6. An antivibration device according to any preceding claim, adapted to damp vibration between the two rigid strength members (1, 2) essentially in a main vibration direction (Z) which is perpendicular to said determined axis (X).

7. An antivibration device according to any preceding claim, in which the elastomer body (3) has a thick wall (11) interconnecting the two rigid strength members (1, 2) and defining at least a part of a first hydraulic chamber (A) filled with liquid, the antivibration device further comprising:
• a deformable second hydraulic chamber (B) also filled with liquid; and
• a narrow passage (C) filled with liquid and interconnecting the first and second hydraulic chambers.

8. An antivibration device according to claim 7, adapted to damp vibration between two rigid strength members (1, 2) essentially in a main vibration direction (Z), the elastomer body (3) including a freely deformable thin wall (10) defining a portion of the second hydraulic chamber, the second strength member (2) being constituted by a plate which is substantially perpendicular to the main vibration direction (Z) and which presents a face that is secured in sealed manner to the elastomer body (3) to co-operate therewith to define the two hydraulic chambers (A, B) and the narrow channel (C).

9. An antivibration device according to claim 8, in which the first and second abutments (14, 15) are secured to the first strength member (1), the first and second counter-abutments (17, 18) being constituted by adjacent zones belonging to a sheet metal cover (16) which covers the elastomer body (3) at least in part and which is secured to the second strength member (2).
